# EUROPEAN PATENT APPLICATION

(11) **EP 1 237 106 A2**
(43) Date of publication of application: **04.09.2002**
(21) Application number: 02001700.0
(22) Date of filing: 24.01.2002
(51) Int. Cl.: G06F 17/60

(54) **Supply chain orders processing system**

(30) Priority: 25.01.2001 JP 2001017597; 31.01.2001 JP 2001023545; 02.02.2001 JP 2001027183
(71) Applicant: HONDA GIKEN KOGYO KABUSHIKI KAISHA, Minato-ku Tokyo (JP)
(72) Inventor: Utsugi, Kazuo, Minato-ku, Tokyo (JP); Karou, Wataru, Minato-ku, Tokyo (JP); Masaki, Naoki, Minato-ku, Tokyo (JP)
(74) Representative: Prechtel, Jörg, Dipl.-Phys. Dr.

(57) **Abstract**

An order in/out processing system is provided, capable of alleviating burdens of an order receiver and an orderer and improving the physical distribution efficiency when the order receiver receives an order. The order in/out processing system includes an order receiving means 14 used by the order receiver 1 to receive the order from the orderer 3 and to acquire corresponding order data, an ordering means used by the order receiver 1 to make an order to an associate 4 on the basis of the order data, a business plan data acquiring means 16 used by the order receiver to acquire business plan data from the associate 3, an operation means 12 used by the order receiver 1 to calculate an expected time of departure at least from the order data and the business plan data, and a transmission means 15 used by the order receiver 1 to transmit to the orderer the expected time of departure calculated by the operation means.

## Description

### BACKGROUND OF THE INVENTION

### Filed of the Invention

This invention relates to an order in/out processing system in case a contractor or order receiver has received an order among an orderer, order receiver and associate.

### Description Of the Related Art

Heretofore, an order receiver having received an order from an orderer used to make an order based on ordering data to an associate like a manufacturer.

If the orderer has a certain stock for expected demands, then it is confirmed upon receiving the order whether any stock exists in the order receiver's warehouse, and if any, the stock is shipped to the orderer even if the stock is not enough for the ordered quantity, and the deficient quantity (unallocated quantity) that the stock cannot suffice is ordered to the associate.

When an inquiry about the time of delivery is received from the orderer, the order receiver makes an inquiry about the progress of fabrication of the ordered goods to the associate by facsimile or telephone.

Based on the progress of the fabrication answered to that inquiry, the order receiver calculates the estimated time of departure (ETD), and inform the orderer of the estimated time of departure by facsimile, for example.

As to the ordered goods not yet delivered to the orderer, the order receiver will ship and deliver them after delivery of the ordered goods from the associate.

In case the order receiver ordered the unallocated quantity to the associate but the ordered goods were divided to those of an earlier estimated time of departure and those of a later estimated time of departure, the order receiver used to ship the earlier received goods to the orderer and ship the later received goods later.

Since the order receiver could send a notice of the expected time of departure only through a lot of steps against the order from the orderer, a lot of personnel and information mediums resulted in intervene in the course, and this required expenses and time.

Furthermore, since the order receiver cannot immediately estimate the date of delivery from the associate, and the order receiver cannot perform planned works for physical distribution.

The orderer, not immediately informed of the estimated time of departure, cannot perform planned works for the receipt, and this will invite an increase of manhours.

The ordered goods may include units of parts that are combinations of some parts forming units.

Furthermore, it might occur that, unless all of the parts requires are ready, assembly of parts is impossible, or assembled structures do not function.

In those cases, on the part of the physical distribution section of the orderer, when a plurality of parts in units suitable for batch processing are delivered separately over different times after intervals, they cannot proceed with jobs for acceptance in a planned manner and cannot deal with the jobs smoothly, which increases manhours and results in inefficiency. Actually, the end fix-it workers could not complete their fix-it jobs until supplied with all of the parts required.

In addition, the orderer must hold the delivered parts discretely until all of the ordered parts become complete. A space is required for them, and it is difficult to adequately control the stock.

Also on the part of the order receiver, it was necessary to conduct delivery over a plurality of times, and it prevented planned execution of physical distribution and resulted in inefficient physical distribution.

It should be noted here that, according to the conventional system for processing orders received and forwarded, in which the order receiver immediately ships its own stock, if any, not limited to parts in units for batch processing by the orderer, the time of departure was not specified, and both the orderer and the order receiver could not handle physical distribution according to their own programs and could not accomplish their jobs efficiently.

Further, if the order receiver wants to settle the back order (unallocated quantity that the order receiver could not allocate to the order from the orderer from its own stock) for all of its product lines, it is necessary to keep a large quantity of stock that will satisfy its expected demand.

Moreover, the orderer who receives orders from a plurality of end users has to increase the safety stock (a quantity of stock calculated by adding an expected increase to the expected demand in accordance with experienced real demands) for the purpose of preventing shortage.

Therefore, both orderers and order receivers suffer heavy burdens of holding stocks.

The invention has been made taking those problems into consideration, and its object is to provide an order in/out processing system, capable of alleviating the burdens of an orderer and an order receiver and improving the efficiency of physical distribution when the order receiver receives an order.

### SUMMARY OF THE INVENTION

To accomplish the object, according to a first aspect of the invention, there is provided an order in/out processing system comprising: order receiving means used by an order receiver to receive an order from an orderer and acquire corresponding order data; ordering means used by the order receiver to make an order to an associate on the basis of the order data; business plan data acquiring means used by the order receiver to acquire business plan data from the associate; operation means used by the order receiver to calculate an expected time of departure, based on at least the order data and the business plan data; and transmission means used by the order receiver to transmit the expected time of departure calculated by the operation means.

With this system, since the order receiver acquires a business plan data from the associate, the order receiver can compare the business plan data with the order data and calculate the expected time of departure from its shipment move, or the like. Then the order receiver can omit the process of making an inquiry to the associate and getting an answer therefrom, and can instead give an early notice about the expected time of departure calculated to the orderer.

In addition, there are fewer steps until getting the expected time of departure, which contributes to reducing intervening personnel and information mediums and to reducing the expense and time. Therefore, the order receiver can accomplish tasks of physical distribution according to its own program, and the orderer can also proceed with jobs for acceptance according to its own program.

According to a second aspect of the invention, there is provided an order in/out processing system comprising: stock data storage means used by the order receiver to store stock data of the own stock of the order receiver; order receiving means used by the order receiver to receive an order from an orderer and acquire corresponding order data; ordering means used by the order receiver to make an order of an unallocated portion, based on the order data and the stock data; business plan data acquiring means used by the order receiver to acquire business plan data from an associate; operation means used by the order receiver to calculate an expected time of departure, based on at least the order data, the stock data and the business plan data; and transmission means used by the order receiver to transmit to the orderer the expected time of departure calculated by the operation means.

In case the order receiver has its own stock, by ordering an unallocated quantity with reference to the stock data and the order data and acquiring a business plan data from the associate, the order receiver can compare the business plan data, stock data and order data, and can calculate the expected time of departure from the shipping move, or the like. Then the order receiver can omit the process of making an inquiry to the associate and getting an answer therefrom, and can give the orderer an early notice about the expected time of departure calculated.

In addition, it takes only a few steps to obtain the expected time of departure, which contributes to reducing intervening personnel and information mediums and to reducing the expense and time. Therefore, the order receiver can accomplish tasks of physical distribution according to its program, and the orderer can also proceed with the jobs for acceptance according to its program.

In the first and second aspects of the invention, the data acquiring means permits the order receiver to acquire respective business plan data from associates through a wide area network WAN.

In this case, since the wide area network WAN is established between the order receiver and a plurality of associates, the order receiver can immediately, easily acquire the business plan data of the associates. Therefore, after forwarding orders to the associates, the order receiver can acquire the business plan data in a good time, then can calculate expected time of departure from the business plan data, and can give an early notice of the expected time of departure.

In the foregoing two aspects of the invention, the associates may be manufacturers, and the business plan data may be a production plan data.

In case the associates are manufacturers, the business plan data used as the basis of calculation of the expected time of departure is production plan data, and the expected time of departure can be calculated using the production plan data as a main data.

According to a third aspect of the invention, there is provided an order in/out processing system comprising: order receiving means used by an order receiver to receive an order from an orderer; ordering means for making an order to an associate an unallocated portion of the order of the orderer; products receiving means for receiving ordered goods shipped from the associate; temporary hold means used by the order receiver to temporarily bold ordered goods other than the unallocated portion until all goods in specific units for batch processing by the orderer are prepared; and shipping means for shipping all ordered goods in the specific units in a batch to the orderer.

The unit that is the unit for batch processing by the orderer is a set of ordered goods convenient for the orderer to handle in a batch.

Since the order receiver temporarily hold ordered goods other than undelivered goods, including its own stock, by means of the temporary hold means until all ordered goods in specific units are fully prepared. Then, when all become complete, the order receiver ships to the orderer all ordered goods in specific units in a batch. Thus, physical distribution tasks of the order receiver can be aggregated and proceeded with according to its program, and the efficiency of physical distribution can be improved.

Since all ordered goods in specific units as batch processing units for the orderer are delivered in a batch, the orderer can smoothly process specific units by planned tasks for acceptance of the delivery and can efficiently proceed with its jobs to also optimize the stock.

The system may include a business plan data acquiring means enabling the order receiver to acquire a business plan data from an associate, an operation means for calculating the expected time of departure from the order data of the orderer, the business plan data, and so on, and a transmission means for transmitting to the orderer the expected time of departure calculated by the order receiver with the operation means. The operation means calculates the expected time of departure on the basis of the expected time of delivery of a part of undelivered goods in specific units, which will be delivered latest.

Since the order receiver can acquire the business plan data from the associate, can compare the business plan data with the order data, and can transmit to the orderer an early notice of the expected time of departure based on a shipping move, i.e. the expected time of departure calculated from the expected time of delivery of the part of undelivered goods in specific units, which will be delivered latest, the order receiver can accomplish its physical distribution tasks according to its program, and the orderer can also accomplish its jobs for acceptance of the delivery by knowing the expected time of departure of specific units that are units for batch processing.

The associate is typically a manufacturer, and the business plan data is typically a production plan data.

In case the associate is a manufacturer, the business plan data used as the basis of calculation of the expected time of departure is a production plan data, and the expected time of departure can be calculated from a shipping move, for example, using the production plan data as a main data.

The business plan data acquiring means enables the order receiver to acquire each business plan data from each associate via a wide area network WAN.

In this case, since the wide area network WAN is established between the order receiver and the associate, the order receiver can immediately, easily acquire the business plan data of the associates. Therefore, after forwarding an order to the associate, the order receiver can acquire the business plan data early, then can calculate the expected time of departure from the business plan data, and can give the orderer an early notice of the expected time of departure of specific units that are units for batch processing.

According to a fourth aspect of the invention, there is provided an order in/out processing system comprising: order receiving means used by an order receiver to receive an order from an orderer; ordering means for making an order to an associate an unallocated portion of the order of the orderer; products receiving means for receiving ordered goods shipped from the associate; temporary hold means used by the order receiver to temporarily hold ordered goods by a date of delivery promised beforehand; and shipping means for shipping the ordered goods to the orderer on the date of delivery promised beforehand.

In this case, the order receiver temporarily holds the ordered goods by the time of shipment promised beforehand, and can keep the promise by shipping the ordered goods to the orderer on the promised date. This enables planned progress of physical distribution by the order receiver and contributes to improvement of the physical distribution efficiency. Additionally, the orderer can proceed with its tasks efficiently by programmed acceptance of the delivery, and can optimize the stock.

According to a fifth aspect of the invention, there is provided an order in/out processing system comprising: a database for storing supply capacity data of a plurality of associates that supply parts to an order receiver for each of items of the parts; order receiving means used by the order receiver to receive an order from an orderer; specific item judging means for judging whether or not ordered parts of the order received by the order receiving means is of any specific item with a very high possibility of being delivered on an appointed date, taking account of the database; ordering means for making a special order of the ordered parts that are judged to be of a specific item by the specific item judging means to a specific manufacturer dealing with the specific item.

In case the goods of the accepted order are of a specific item that will be delivered on the appointed date of delivery with a very high possibility, the order receiver makes a special order to an associate dealing with the specific item, and when receiving the products of the specially ordered specific item, the order receiver directly ships them to the orderer without putting them in its storage at all.

Since the possibility of delivery of the specific item on the appointed date of delivery is very high, the order receiver can deliver the products to the orderer on the appointed date with almost all possibility only by making a special order and need not hold its own stock.

Therefore, the order receiver is alleviated from the burden of a stock. Also on the part of the orderer, as far as the specific item is concerned, since the appointed time of delivery is definite, the orderer need not hold its safety stock, and is also alleviated from the burden of a stock.

In the fifth aspect of the invention, the associate may be a manufacturer, and the supply capacity data may be data about whether or not the ordered parts are of a specific item that will be delivered on the appointed time of delivery with a very high possibility, taking account of the manufacturer's production capacity of that item, for example.

This is the case where the order receiver has a direct business relation with the manufacturer, and the production capacity of the manufacturer corresponds to the supply capacity. The order receiver can make a special order to the manufacturer having a production capacity capable of dealing with a specific item that will be delivered on the appointed time of delivery with a very high possibility.

### BRIEF DESCRIPTION OF THE DRAWINGS

Fig. 1 is a diagram that shows a business relation among three parties, i.e. an order receiver, orderer, manufacturer, according to the first embodiment of the invention.
Fig. 2 is a schematic diagram of configuration of a system for processing orders received or forwarded.
Fig. 3 is a flowchart of work procedures in the same order in/out processing system.
Fig. 4 is a schematic diagram of configuration of an order in/out processing system according to the second embodiment of the invention.
Fig. 5 is a flowchart of work procedures in the same order in/out processing system.
Fig. 6 is a schematic diagram of configuration of an order in/out processing system, including the function of temporarily holding goods to be shipped, according to the third embodiment of the invention.
Fig. 7 is a flowchart of work procedures in the same order in/out processing system.
Fig. 8 is a flowchart of work procedures in an order in/out processing system according to the fourth embodiment of the invention.
Fig. 9 is a schematic diagram of configuration of an order in/out processing system according to the fifth embodiment of the invention.
Fig. 10 is a flowchart of work procedures upon receipt of an order of a specific item in the same order in/out processing system.

### DESCRIPTION OF THE PREFERRED EMBODIMENTS

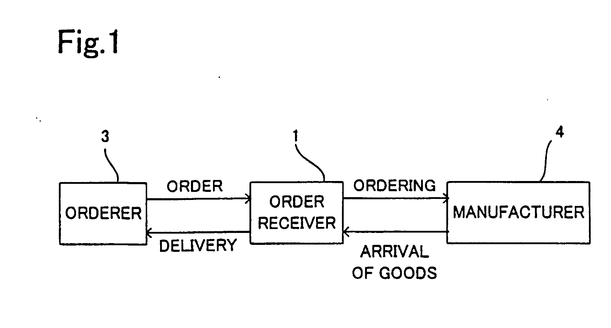

A first embodiment of the invention will now be explained below with reference to Figs. 1 through 3.

Fig. 1 is a diagram that shows a business relation among three parties, i.e. an order receiver 1, orderer 3, manufacturer 4, according to the instant embodiment.

The order receiver 1 deals with vehicle parts but does not hold its stock basically such that, upon receipt of an order from the orderer 3, the order receiver 1 makes an order to the manufacturer, and delivers the ordered goods received from the manufacturer 4.

The orderer 3 may be a domestic corporation, but herein, it is assumed as being an overseas affiliated company that receives orders from overseas orderers 3 and delivers ordered goods transported by sea, for example.

The order receiver 1 has business relations with a plurality of manufacturers that are domestic associates, and can acquire predetermined manufacturer's data anytime from the manufacturers under business relations.

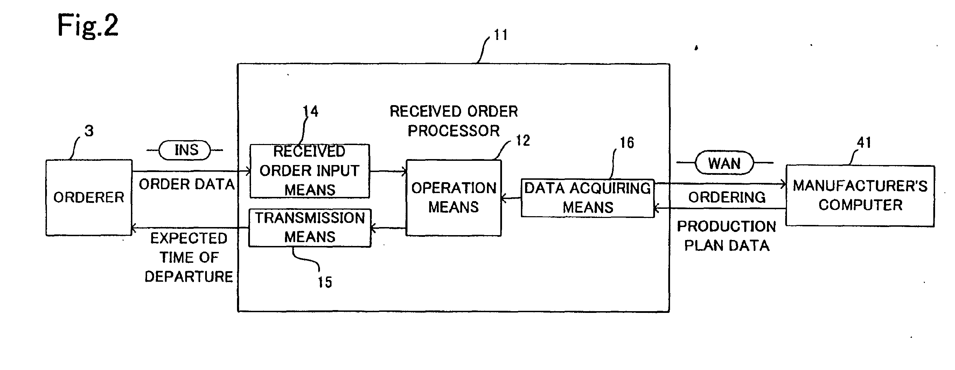

A schematic configuration of the order in/out processing system on the part of the order receiver 1 is shown in Fig. 2.

A received order processor 11 on the part of the order receiver is a computer system having an operation means 12 for calculating an expected time of departure of ordered goods.

The received order processor 11 further includes a received order input means 14 for inputting an order data from the orderer 3 by communication via INS (International Network System).

Alternatively, orders may be received by facsimile or telephone.

The received order processor 11 also includes a transmission means 15 for transmitting an expected time of departure of the ordered goods to the orderer 3 through INS.

Between the received order processor 11 and computers 41 of a plurality of manufacturers 4, a wide area network WAN connected on line is established.

The received order processor 11 includes a data acquiring means 16 capable of acquiring data from computers 41 of respective manufacturers on line through WAN. Particularly in this embodiment, the order receiver 1 can acquire production plan data of individual manufacturers 4 any time with the received order processor 11.

In the order in/out processing system having the above-explained configuration, when an order comes from the orderer 3 and the order data is input by the received order input means 14, the operation means 12 in the received order processor 11 calculates an expected time of departure based on a production plan data acquired from a manufacturer's computer 41 by the data input means 16.

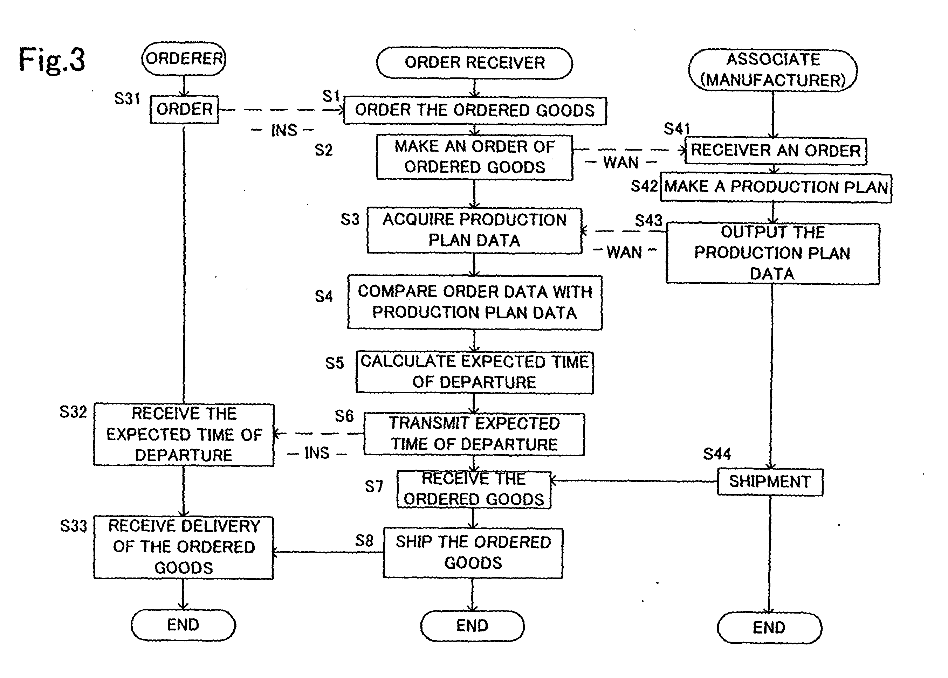

Work procedures in the order in/out processing system are explained below with reference to the flowchart of Fig. 3.

When an order of parts comes from the orderer 3 via INS (step 31), the order receiver 1 receives it and inputs the order data (step 1).

The order receiver makes an order of the ordered goods via WAN to a specific manufacturer 4 having the ordered goods in its production lines (step 2).

Responsively, the specific manufacturer 4 receives the order (step 41), and makes a production plan (step 42).

The order receiver 1 makes access to the computer of the specific manufacturer 4 and acquires the production plan data (step 3) output from the manufacturer 4 via WAN (step 43).

Then the order data and the acquired production plan data are compared (step 4), and an expected time of departure is calculated taking account of the shipping move, sailing date of the transport ship, and other factors (step 5).

The estimated time of departure of the ordered goods is then transmitted to the orderer 3 via INS (step 6).

The orderer 3 will receive an early notice of the expected time of departure (step 32), and need not make inquiries about the date of delivery.

The manufacturer 4 manufacturers the ordered goods according to the production plan made in step 42, and ships them to the order receiver 1 (step 44).

When the ordered goods arrive (step 7), the order receiver 1 ships the ordered goods received to the orderer 3 just at the expected time of departure (step 8).

Thus the orderer 3 receives the delivery of the ordered goods (step 33).

As explained above, in receipt of an order, since the order receiver 1 can acquire the production plan data of the manufacturer 4 via WAN, it can calculate the expected time of departure by comparing the production plan data with the order data and taking account of the shipping move, etc. Therefore, the order receiver 1 can omit the process of making an inquiry to the manufacturer and getting an answer therefrom, which was indispensable conventionally, and can calculate the expected time of departure in a short time and can transmit an early notice of the expected time of departure to the orderer 3.

Therefore, it takes only few steps to inform of the expected time of departure, and it takes less personnel and information medium. It results in reducing the expense and time, and the order receiver 1 can accomplish its planned tasks for physical distribution in an improved work efficiency.

Also on the part of the orderer 3, since the expected time of departure is informed early, the orderer 3 can proceed with jobs for acceptance according to its own program.

The expected time of departure may be automatically, periodically transmitted from the order receiver via INS.

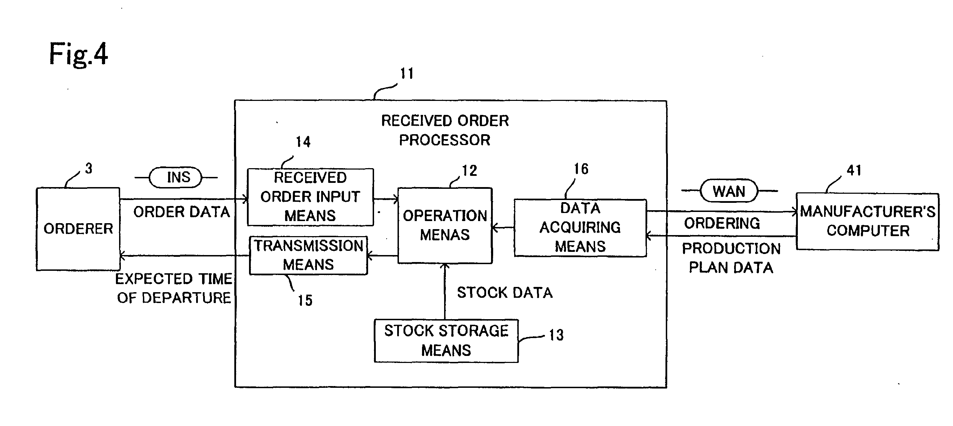

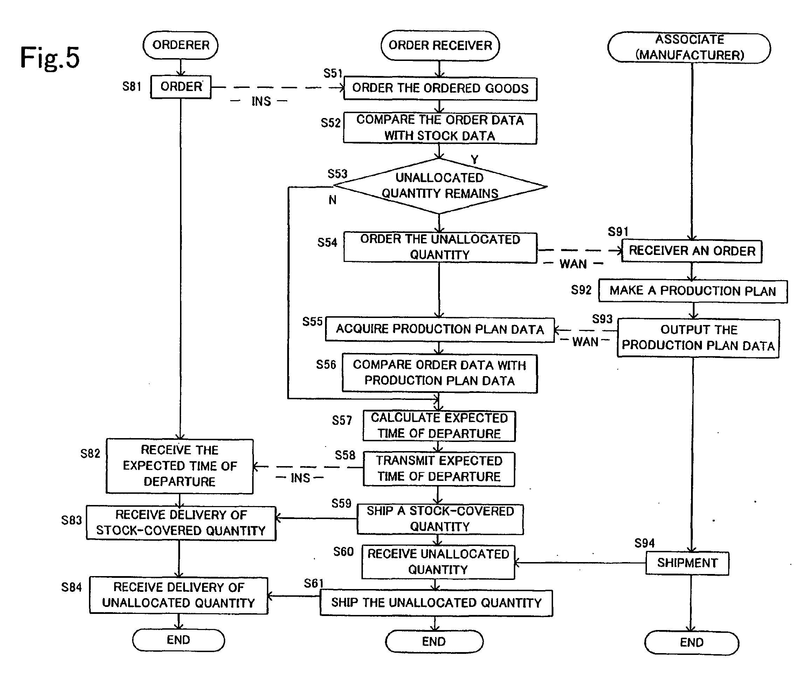

A second embodiment will be described with reference to Figs. 4 and 5, in which the order receiver 1 has a quantity of stock according to the estimated demand.

Fig. 4 is a schematic diagram of entire configuration of an order in/out processing system which will be explained here. This is substantially the same as the schematic diagram of configuration of the foregoing embodiment (common reference numerals are used), but it is partly different in that the received order processor 11 includes a stock storage means 13.

That is, the received order processor 11 on the part of the order receiver includes the stock storage means 13 that stores data of the stock condition in the warehouse, and the operation means 12 for calculating the expected time of departure of the ordered goods can read out the stock condition data stored in the stock storage means 13 any time.

When an order comes from the orderer 3 and the order data is input by the received order input means 14, the operation means 12 in the received order processor 11 calculates an expected time of departure, based on the stock data read out from the stock storage means 13 and the production plan data acquired from the manufacturer's computer by the data acquiring means 16.

Work procedures in the order in/out processing system are explained below with reference to the flowchart of Fig. 5.

When an order of parts comes from the orderer 3 via INS (step 81), the order receiver 1 receives it and inputs the order data (step 51).

The order receiver 1 compares the order data with the stock data (step 52), and judges whether the stock is sufficient for covering the order, or an unallocated quantity remains (step 53).

If no unallocated quantity remains, that is, when the stock is sufficient for covering all ordered goods, the flow jumps to step 57 to immediately calculate an expected time of departure of the ordered goods.

If it is judged in step 53 that a certain unallocated quantity remains, the flow goes to step 54 to make an order of the unallocated quantity via WAN to a specific manufacturer 4 having the parts in the unallocated quantity of goods in its production lines.

Responsively, the specific manufacturer 4 receives the order (step 91) and makes its production plan (step 92).

The order receiver 1 makes access to the computer of the specific manufacturer 4 and acquires the production plan data (step 56) output from the manufacturer 4 via WAN (step 55).

Then the order data is compared with the production plan data acquired here (step 56).

That is, the unallocated quantity of goods other than that covered by the stock among the ordered goods is verified with reference to the production plan data.

The part of the goods covered by the stock among the ordered goods has already been compared with the stock data in step 52.

Therefore, expected times of departure are calculated, for the part of the ordered goods covered by the stock, based on the stock data, for the unallocated part, based on the production plan data, taking account of the shipping move, sailing date of the transport ship, and other factors (step 57).

Subsequently, the expected times of departure of the part in the stock and the unallocated part are noticed to the orderer 3 by transmission using INS (step 58).

The orderer 3 receives the notice of the expected times of departure (step 82).

The order receiver 1 ships all of the ordered goods when no unallocated parts remain, or ships only the part covered by the stock among the ordered goods just at the expected time of departure thereof when unallocated parts remain (step 59).

The orderer 3 receives the delivery of the quantity covered by the stock (step 83).

The manufacturer 4, after completing the production according to the production plan made in step 92, ships the unallocated parts to the order receiver 1 (step 94).

In receipt of the delivery of the unallocated parts (step 60), the order receiver 1 ships the received goods to the orderer 3 just at the expected time of departure of the unallocated parts (step 61).

The orderer 3 receives the delivery of the unallocated quantity (step 84).

As explained above, if all goods of an order received can be covered by its stock, the order receiver 1 can immediately calculate the expected time of departure, then can transmit the notice of the expected time of departure to the orderer 3, and can deliver all of the ordered goods just at the expected time of departure.

If any unallocated quantity remain in the ordered goods, since the order receiver 1 can acquire the production plan data of the manufacturer 4 via WAN, it is possible to calculate an expected time of departure by comparing the order data of the unallocated parts with the production plan data and taking account the shipping move and other factors. Therefore, the order receiver 1 can omit the process of making an inquiry to the manufacturer and getting an answer therefrom, which was indispensable conventionally, then can calculate the expected time of departure in a short time, and can transmit an early notice of the expected time of departure to the orderer 3.

Therefore, it takes only few steps to inform of the expected time of departure, and intervening personnel and information mediums can be reduced. It results in reducing the expense and time, and the order receiver 1 can accomplish its planned tasks for physical distribution in an improved work efficiency.

Also on the part of the orderer 3, since the expected time of departure is informed early even when any unallocated parts remain in the ordered goods, the orderer 3 can proceed with jobs for acceptance according to its program.

The foregoing embodiments have been explained as the associate of the order receiver 1 being a manufacturer 4; however, it may be an intermediary agent other than manufacturers, such as, for example, an associate for packaging and shipping goods delivered from a manufacturer.

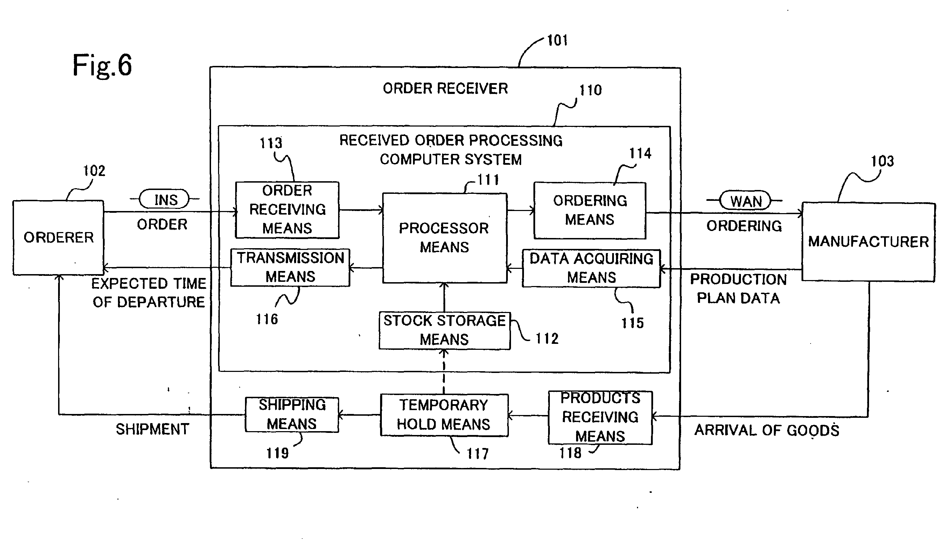

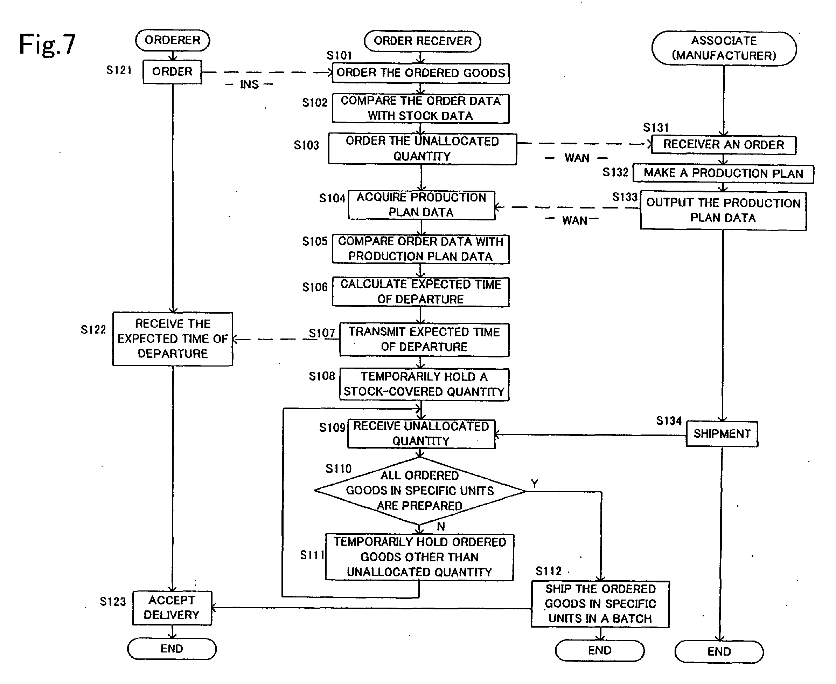

A third embodiment will be next explained below with reference to Figs. 6 and 7.

Fig. 6 illustrates an order in/out processing system including in an order receiver 101 the function of temporarily holding goods to suspend shipment of goods from a manufacturer 103 to an orderer 102, according to the third embodiment of the invention.

The order receiver 101 deals with vehicle parts, and in receipt of an order from the orderer 102, checks its stock, makes an order of unallocated parts to the manufacturer, receives delivery of the ordered goods and delivers them to the orderer 102. The orderer 102 may be a domestic corporation, but herein, it is assumed as being an overseas affiliated company that receives orders from overseas orderers 102 and delivers ordered goods transported by sea, for example.

The order receiver 101 is equipped with a received order processing computer system 110 and has a temporary hold means 117 that is a warehouse. Thus the order receiver 101 temporarily holds in the temporary hold means 117 the ordered goods received by a products receiving means 118 from the manufacturer 103, and ships them to the orderer 102 by means of a shipment means 119.

The received order processing computer system 110 includes a processor means 111 in charge of operation and a stock storage means 112 for storing the status of stock in the temporary hold means 117.

The received order processing computer system 110 also includes an order receiving means 113 to input an order data of an order by communication via INS (International Network System) from the orderer 102.

Alternatively, the order may be received by facsimile or telephone.

The received order processing computer system 110 further includes a transmission means 115 to transmit an expected time of departure of ordered goods, and so on, to the orderer 102 via INS.

Additionally, a wide area network WAN connected on line is established between the received order processing computer system 110 and a computer on the part of the manufacturer 103.

Through this WAN, an ordering means 114 of the received order processing computer system 110 transmits an order of certain parts to the manufacturer, and can acquire production plan data any time on line from the manufacturer 103 by means of a data acquiring means 115.

The processor means 111 can calculate the expected time of departure for the order data input through the order receiving means 113 on the basis of the stock data stored in the stock storage means 112 and the production plan data 115 acquired by the data acquiring means 115, and gives a notice of the expected time of departure to the orderer 102 by transmission by the transmission means 116.

Work procedures in the order in/out processing system are explained below with reference to the flowchart of Fig. 7.

When an order of parts comes from the orderer 102 via INS (step 121), the order receiver 101 receives it and inputs the order data (step 101).

The order receiver 101 compares the order data with the stock data (step 102), and makes an order to a specific manufacturer 103 having unallocated goods not covered by the stock in its production lines via WAN (step 103).

The specific manufacturer 103 receives the order (step 131), and makes a production plan (step 132).

The order receiver 101 makes access to the computer of the specific manufacturer 103 and acquires the production plan data (step 104) output from the manufacturer 103 via WAN (step 133). Then the order data is compared with the production plan data acquired here (step 105).

That is, the unallocated quantity other than that covered by the stock among the ordered goods is compared with the production plan data, and the expected time of departure is calculated (step 106).

The quantity covered by the stock among the ordered goods has already been compared with the stock data in step 52.

Among ordered parts, shipment of parts in specific units for batch processing by the orderer is suspended until all of the parts become complete. For this purpose, the processor means 111 calculates a single estimated time of departure ready for shipment of all goods in the specific units in batch.

Specific units include combinations of a plurality of parts into unit products, sets of parts which all are indispensable for assembling them or for proper function of their assemblies, sets of parts designated by the orderer to be handled as units, and so on. Additionally, there are units of a plurality of ordered goods that are desirable to be handled in batch for convenience in a physical distribution department of an overseas affiliated company.

As to such ordered goods in specific units, an expected time of departure is calculated and determined on the date ready for shipment in batch, based on the stock data and the production plan data and taking account the shipping move, sailing date of the transport ship, and so on (step 106).

If a part of the specific units is unallocated goods, then the expected time of departure of the unallocated goods will be determined, based on the expected time of delivery of goods which will be delivered latest from the manufacturer 103, which will be obtained from the production plan data.

The expected time of departure obtained by calculation is transmitted to the orderer 102 via INS (step 107), and the orderer 102 can receive the notice of the expected time of departure early (step 122).

The orderer 102, early informed of the expected time of departure of collective delivery of ordered goods in specific units, can proceed with jobs for acceptance of delivery according to its plan.

The order receiver 101 temporarily holds a part of the goods in specific units, which can be covered by its stock, suspending its delivery (step 108), and waits for arrival of the unallocated goods (step 109).

The manufacturer 103, after completing the production according to its production plan made in step 132, ships the unallocated goods to the order receiver 101 (step 134).

Receiving the unallocated goods (step 109), the order receiver 101 checks whether all goods in the specific units are ready (step 110), and if not, goes to step 111 to temporarily hold the ordered goods other than the quantity of the undelivered goods not yet received, including the goods in the specific units ready from the stock, and returns back to step 109 to wait for acceptance of the remainder unallocated goods.

When all of the ordered goods in the specific units are ready, the flow moves from step 110 to step 112 to ship all of the goods in the specific units in batch just at the expected time of departure.

Therefore, the orderer 102 receives delivery of all of the goods in specific units among the ordered goods (step 123).

Since all ordered goods in specific units for batch processing are delivered simultaneously, the orderer 102 can smoothly process every specific units through planned jobs of acceptance and can proceed with related tasks efficiently. Additionally, its stock can be optimized as well.

Furthermore, since the order receiver temporarily holds a part of the ordered goods already prepared in the temporal hold means until the goods in specific units are fully prepared, and ships all of the ordered goods in specific units to the orderer only after they are fully prepared, its jobs for physical distribution are consolidated, and the order receiver can proceed with the jobs for physical distribution according to its plan, thereby to improve the physical distribution efficiency.

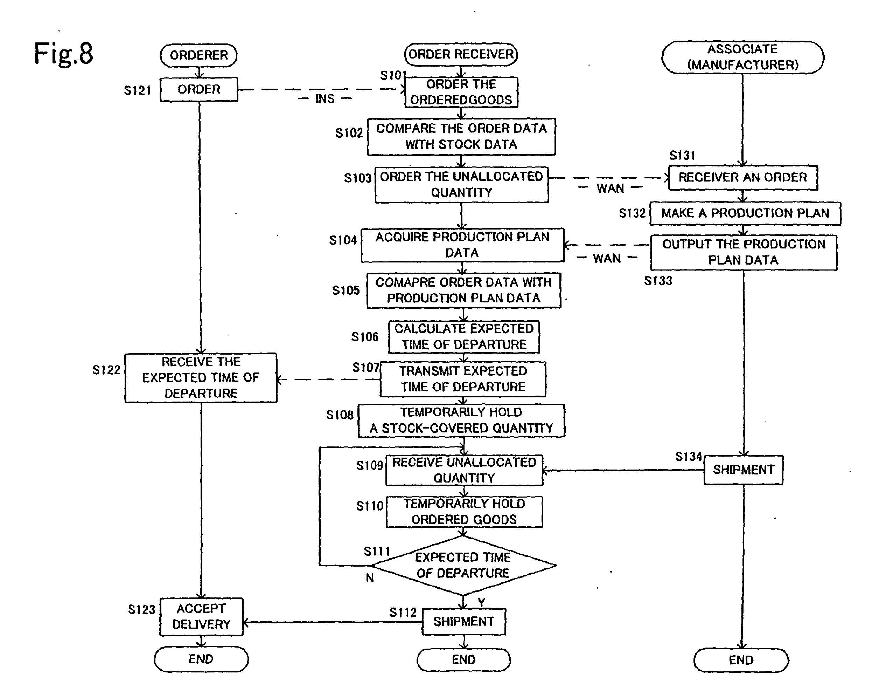

A fourth embodiment of the invention will be described with reference to the flowchart of Fig. 8.

This flowchart is different from the flowchart of Fig. 7 of the third embodiment merely in steps 110, 111 and 112, and common in other steps, so their explanation is omitted.

Note here that in calculation of the expected time of departure in step 106, the expected time of departure pursuant to the orderer's request, not limited to the expected date of batch delivery, is calculated, and notified to the orderer 102 by transmission using INS (step 107).

Then, a part covered by the stock is temporarily held (step 108), and even after the unallocated portion arrives (step 109), the ordered goods are still held temporarily (step 109), waiting for the expected time of departure (step 111).

That is, the unallocated portion, even if arriving earlier than the expected time of departure, is temporarily held together with the portion covered by the stock, and they are shipped just at the expected time of departure (step 112).

Since the order receiver 101 temporarily holds the ordered goods by the expected time of departure promised beforehand and ships them to the orderer 102 just at the expected time of departure, the order receiver 101 can keep the promise. Therefore, the order receiver 101 can proceed with its jobs for physical distribution according to the program, and also the orderer 102 can proceed with jobs efficiently through planned jobs for acceptance of the delivery, thereby to optimize the stock as well.

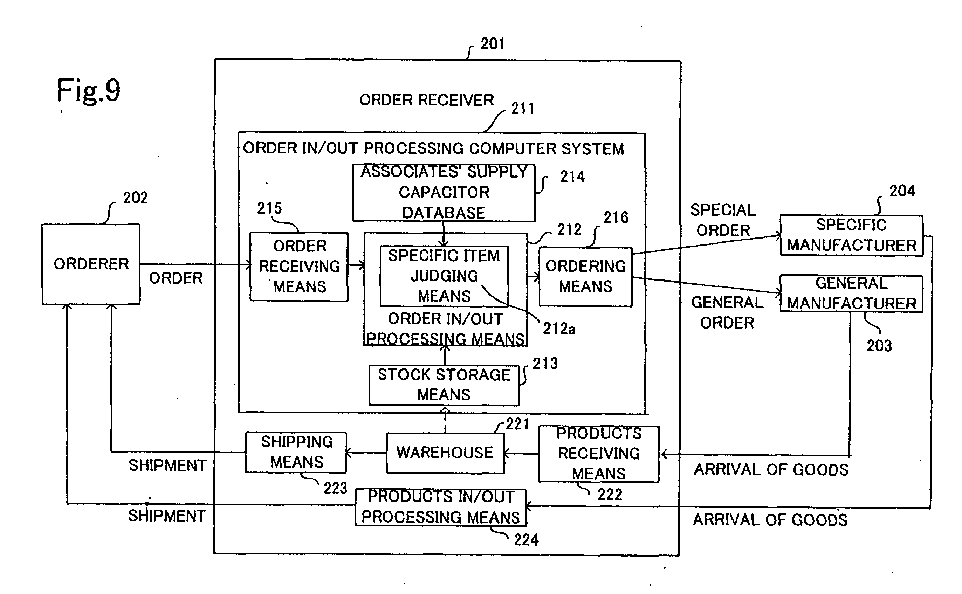

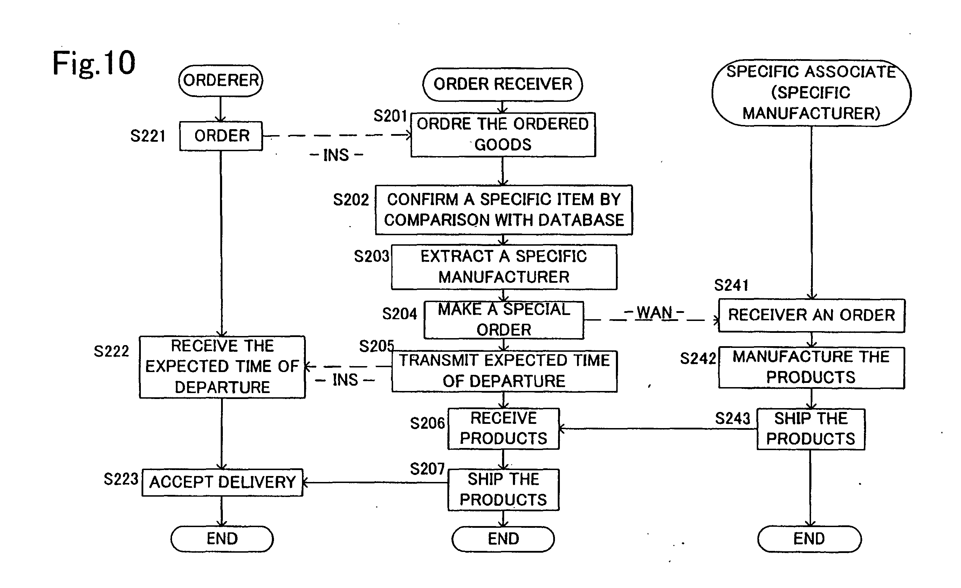

Next will be explained a fifth embodiment of the invention with reference to Figs. 9 and 10.

Fig. 9 is a diagram that shows an order in/out processing system on the part of an order receiver 201 between an orderer 202 and manufacturers 203, 204 as associates according to the embodiment explained here.

The order receiver 201 deals with vehicle parts, holds a stock in its own warehouse 221, receives orders from the orderer 202, and makes orders to he manufacturers 203, 204.

The orderer 202 may be a domestic corporation, but herein, it is assumed as being an overseas affiliated company that receives orders from a plurality of end users and makes an order to the order receiver 201, collecting those orders from the end users in a batch.

The order receiver 201 receives the order from the overseas orderer 202 and delivers the ordered goods transported by ship, for example.

Manufacturers are divided into two groups of manufacturers 203, 204, depending on their production capacity for parts to be manufactured.

That is, a manufacturer in one group is a specific manufacturer 204 having a high production capacity of certain parts and having a very high possibility of delivery thereof on an appointed date, whereas a manufacturer in the other group is a general manufacturer 203 whose possibility of delivery on an appointed date is not so high. Items of parts that will be supplied by the specific manufacturer 204 on an appointed date with a very high possibility are herein called specific items.

Depending on the sort of parts, no specific manufacturer will exist.

Assuming that an order of a specific item from the order receiver 201 to the specific manufacturer 204 is called a special order, it is determined beforehand between the order receiver 201 and the specific manufacturer 204 that, as to special orders, although the order receiver 201 receives products of the specific item shipped from the specific manufacturer 204, but ships them directly without warehousing them.

Therefore, the order receiver 201 is equipped with a product in/out processing means 224 for receiving products of a specific item but directly shipping them without their warehousing.

Manufacturers may become specific manufacturers 204 or general manufacturers 203, depending on ordered items.

The order receiver 201, having a warehouse 221, makes an order of a general item instead of a specific item to a general manufacturer 203, based on an expected demand, holds products of such a general item received from the general manufacturer 203 by means of a products receiving means 222 in the warehouse 221 as its own stock, and ships a quantity of the products by a shipment means 223 in response to an order from the orderer 202.

The order receiver 201 is also equipped with an order in/out processing computer system 210, and an order in/out processor thereof is in charge of processing receipt and dispatch of orders, in cooperation with a stock storage means 212 for storing the stock condition in the warehouse 221 and an associates' supply capacity database 214, or the like.

The associates' supply capacity database stores information about supply (production) capacities of manufacturers for respective items of parts, and based on the associates' supply capacity database 214, the order in/out processing means 212 can judge whether an item is a specific item with a high possibility of delivery on an appointed date, taking account of the production capacity, for example, and can extracts a special manufacturer 204.

For this purpose, the received order processing means 212 includes a specific item judging means 212a for judging whether an item is a specific item or not.

The order in/out processing computer system 211 includes an order receiving means 215 for inputting an order data of an order from the orderer 202 by transmission using INS (International Network System).

Alternatively, orders may be received by facsimile or telephone.

A wide area network WAN connected on line is established between the order in/out processing computer system 211 and computers of the manufacturers 203, 204, such that the ordering means 216 in the order in/out processing computer system 211 can forward a general order to the general manufacturer 203 and a special order to the specific manufacturer 204 through WAN.

This order in/out processing system has the configuration explained below.

As to general items other than specific items, the system is configured to make a general order to the general manufacturer 203 based on an expected demand, receives products shipped from the general manufacturer 203 with the products receiving means 222, and holds in the warehouse 221 as a stock.

Therefore, the order receiver 202 holds a stock of general items whose possibility of on-time delivery is not so high, but holds no stock of specific items.

When an order of a general item comes, the stock is allocated thereto, and a quantity of the stock is shipped from the warehouse 221 to the orderer 202 by means of the shipping means 223.

Work procedures executed when the order receiver 202 receives an order of a specific item are explained below with reference to the flowchart of Fig. 10.

When an order or parts comes from the orderer 202 via INS (step 221), the order in/out processor means 212 inputs the order data by means of the order receiving means 215 (step 201), and a specific item judging means 212a compares the ordered items with data in the associates' supply capacity database 201 to confirm that the order item is a specific item (step 202).

Simultaneously, the system extracts the specific manufacturer 204 having the specific item in its production line from the associates' supply capacity database 201 (203), and makes a special order of the specific item to the specific manufacturer 204 (step 204).

The specific manufacturer 204 receives the special order (step 241), then produces products of the specific item within a fixed period of time (step 242), and ships them (step 242).

Since the specific manufacturer has a high production capacity of the specific item and can deliver it on an appointed date with a very high possibility, the order receiver 201 can readily calculate an expected time of departure and can transmits a notice thereof to the orderer 202 via INS (step 205). Responsively, the orderer 202 receives the notice (step 222) and can know the expected time of departure.

The products of the specific item shipped from he specific manufacturer 204 is received by the product in/out processing means 224 of the order receiver 201 (step 206), but they are directly shipped to the orderer 202 just at the expected time of departure not through the warehouse 221 (207) and delivered to the orderer 202 (step 223).

As explained above, since specific items of parts can be delivered on an appointed date with a very high possibility, the order receiver 201 can deliver them on the appointed date with almost all possibility merely by making a special order, and need not hold its own stock.

Therefore, the order receiver 201 is alleviated from the burden of holding its own stock as the ratio of specific items in items it deals with becomes large.

Also on the part of the orderer 202, as to specific items, since the expected date of delivery is definite, the orderer 202 need not hold them as its own stock, and is alleviated from the burden of holding their stock.

Since back orders occur only for general items of parts, as the ratio of specific items increases, back orders themselves also decrease.

An order in/out processing system is provided, capable of alleviating burdens of an order receiver and an orderer and improving the physical distribution efficiency when the order receiver receives an order. The order in/out processing system includes an order receiving means 14 used by the order receiver 1 to receive the order from the orderer 3 and to acquire corresponding order data, an ordering means used by the order receiver 1 to make an order to an associate 4 on the basis of the order data, a business plan data acquiring means 16 used by the order receiver to acquire business plan data from the associate 3, an operation means 12 used by the order receiver 1 to calculate an expected time of departure at least from the order data and the business plan data, and a transmission means 15 used by the order receiver 1 to transmit to the orderer the expected time of departure calculated by the operation means.

## Claims

1. An order in/out processing system comprising:
order receiving means used by an order receiver to receive an order from an orderer and acquire corresponding order data;
ordering means used by said order receiver to make an order to an associate on the basis of said order data;
business plan data acquiring means used by said order receiver to acquire business plan data from said associate;
operation means used by said order receiver to calculate an expected time of departure, based on at least said order data and said business plan data; and
transmission means used by said order receiver to transmit the expected time of departure calculated by said operation means.

2. An order in/out processing system according to claim 1 wherein said business plan data acquiring means is used by said order receiver to acquire each business plan data from each associate through a wide area network WAN.

3. An order in/out processing system according to claim 1 wherein said associate is a manufacturer, and said business plan data is a production plan data.

4. An order in/out processing system comprising:
stock data storage means used by said order receiver to store stock data of the own stock of said order receiver;
order receiving means used by said order receiver to receive an order from an orderer and acquire corresponding order data;
ordering means used by said order receiver to make an order of an unallocated portion, based on said order data and said stock data;
business plan data acquiring means used by said order receiver to acquire business plan data from an associate;
operation means used by said order receiver to calculate an expected time of departure, based on at least said order data, said stock data and said business plan data; and
transmission means used by said order receiver to transmit to said orderer the expected time of departure calculated by said operation means.

5. An order in/out processing system according to claim 4 wherein said business plan data acquiring means is used by said order receiver to acquire each business plan data from each associate through a wide area network WAN.

6. An order in/out processing system according to claim 4 wherein said associate is a manufacturer, and said business plan data is a production plan data.

7. An order in/out processing system comprising:
order receiving means used by an order receiver to receive an order from an orderer;
ordering means for making an order to an associate an unallocated portion of said order of said orderer;
products receiving means for receiving ordered goods shipped from said associate;
temporary hold means used by said order receiver to temporarily bold ordered goods other than said unallocated portion until all goods in specific units for batch processing by said orderer are prepared; and
shipping means for shipping all ordered goods in said specific units in a batch to said orderer.

8. An order in/out processing system according to claim 7 further comprising:
business plan data acquiring means used by said order receiver to acquire business plan data from said associate;
operation means for calculating an expected time of departure, based on at least order data of said orderer and said business plan data; and
transmission means used by said order receiver to transmit to said orderer the expected time of departure calculated by said operation means,
wherein said operation means calculates said expected time of departure, based on an expected date of delivery of a portion that will be delivered latest among ordered goods in said specific units, which still remain undelivered.

9. An order in/out processing system according to claim 8 wherein said associate is a manufacturer, and said business plan data is a production plan data.

10. An order in/out processing system according to claim 8 wherein said business plan data acquiring means is used by said order receiver to acquire each business plan data from each associate through a wide area network WAN.

11. An order in/out processing system comprising:
order receiving means used by an order receiver to receive an order from an orderer;
ordering means for making an order to an associate an unallocated portion of said order of said orderer;
products receiving means for receiving ordered goods shipped from said associate;
temporary hold means used by said order receiver to temporarily hold ordered goods by a date of delivery promised beforehand; and
shipping means for shipping said ordered goods to said orderer on said date of delivery promised beforehand.

12. An order in/out processing system comprising:
a database for storing supply capacity data of a plurality of associates that supply parts to an order receiver for each of items of said parts;
order receiving means used by said order receiver to receive an order from an orderer;
specific item judging means for judging whether or not ordered parts of the order received by said order receiving means is of any specific item with a very high possibility of being delivered on an appointed date, taking account of said database;
ordering means for making a special order of said ordered parts that are judged to be of a specific item by said specific item judging means to a specific manufacturer dealing with said specific item.

13. An order in/out processing system according to claim 12 wherein said associate is a manufacturer, and said supply capacity data is a data indicating at least whether or not respective parts are of specific items that will be delivered on appointed dates with a very high possibility, taking account of the production capacity of said associate regarding said parts.
